# EUROPÄISCHE PATENTSCHRIFT

(11) **EP 2 625 348 B1**
(45) Veröffentlichungstag und Bekanntmachung des Hinweises auf die Patenterteilung: **21.08.2019**
(21) Anmeldenummer: 10771055.0
(22) Anmeldetag: 06.10.2010
(51) Int. Cl.: E04F 15/02, E04F 15/18, E04C 2/52, E04C 2/04, H02G 3/38

(54) **FUßBODENBELAG SOWIE VERWENDUNG EINES FUßBODENPANEELS**
FLOOR COVERING AND USE OF A FLOOR PANEL
REVÊTEMENT DE PLANCHER ET UTILISATION D'UN PANNEAU DE PLANCHER

(43) Veröffentlichungstag der Anmeldung: 14.08.2013
(73) Patentinhaber: Scholz, Karl-Heinz Peter, 63768 Hösbach (DE)
(72) Erfinder: Scholz, Karl-Heinz Peter, 63768 Hösbach (DE)
(74) Vertreter: Schacht, Benny Marcel Corneel
(86) Internationale Anmeldenummer: PCT/EP2010/064926
(87) Internationale Veröffentlichungsnummer: WO 2012/045343

(56) Entgegenhaltungen:
- WO-A1-2011/015375
- DE-A1-102006 020 135
- DE-C1- 10 034 407
- DE-U1- 8 604 531
- DE-U1-202005 007 293
- DE-U1-202005 020 617
- DE-U1-202010 001 675

## Beschreibung

Die Erfindung betrifft einen Fußbodenbelag nach Anspruch 1 sowie eine Verwendung eines Fußbodenpaneels nach Anspruch 9.

Im Stand der Technik sind Fußbodenbeläge und Systemböden bekannt, die verschiedene Funktionen, wie beispielsweise Lastverteilung, Gewölbebildung, akustische Entkopplung, Dekoration, Gehkomfort, Abriebfestigkeit und/oder Reinigungstätigkeit, erfüllen sollen. Derartige Bodenbeläge werden üblicherweise an der Baustelle montiert und können mehrere Systemböden in Kombination umfassen. Es sind ebenfalls Komplettsysteme bekannt, die in aufwendigen Montage-Arbeiten zusammengesetzt werden. Die Gesamthöhe der bekannten Systemböden ist üblicherweise größer als 35 mm, meist größer als 50 mm. Gerade bei Renovierungsarbeiten ist dies oft problematisch, da Aufbauhöhen von mehr als 25 mm oftmals nicht zur Verfügung stehen.

Aus der DE 20 2005 020 617 U1 ist ein Fußbodenbelag aus Fußbodenpaneelen bekannt. Die Fußbodenpaneele weisen einen plattenförmigen Kern und eine obere Deckschicht auf. Dabei sind zwei einander gegenüberliegende Kanten der Fußbodenpaneele mit einem Nut-Feder-System als mechanisches Verriegelungsmittel ausgestattet. Der Kern ist aus einem mineralischen Material.

Die durch das Nut-Feder-System erreichte formschlüssige Ausführung hat zur Folge, dass Unebenheiten des Untergrundes ausgeglichen werden. Allerdings wird der Montage- und Reparaturaufwand als vergleichsweise hoch empfunden.

Insbesondere werden auch die Schallschutzeigenschaften als insgesamt unbefriedigend empfunden.

Aus der US 2002/0194806 A1 ist ein konstruktiv integriertes, zugängliches Bodensystem mit entfernbaren Fußbodenpaneelen bekannt.

Der Erfindung liegt die Aufgabe zu Grunde, einen Fußbodenbelag sowie ein Fußbodenpaneel aufzuzeigen, wobei der Montage- und Reparaturaufwand reduziert sein soll. Insbesondere sollen auch die Schallschutzeigenschaften verbessert sein. Diese Aufgabe wird durch einen Fußbodenbelag nach Anspruch 1 sowie eine Verwendung eines Fußbodenpaneels nach Anspruch 9 gelöst. Der Fußbodenbelag umfasst lose verlegte Fußbodenpaneele, wobei die Fußbodenpaneele eine obere Deckschicht, eine unterhalb der Deckschicht angeordnete Gipsschicht und eine unterhalb der Gipsschicht angeordnete, insbesondere elastische, Dämmschicht, vorzugsweise Korkschicht, aufweist.

Unter dem Begriff "lose verlegt" soll insbesondere verstanden werden, dass mehrere der einzelnen Fußbodenpaneele gegenüber zumindest einem jeweils benachbarten Fußbodenpaneel derart verlegt sind, dass diese, ohne dass zugleich das benachbarte Fußbodenpaneel mit entfernt werden müsste, entfernt werden können.

Ein Kerngedanke der Erfindung liegt also darin - unter bewusstem Verzicht auf die Vorteile einer formschlüssigen Verbindung - die Fußbodenpaneele lose zu verlegen. Durch das Vorsehen der Gipsschicht ist trotz der losen Verlegungsart eine ausreichende Stabilität des Fußbodenbelags gewährleistet, da sich Gipsschicht durch eine vergleichsweise hohe Dichte, beispielsweise gegenüber Holz oder Kunststoff, auszeichnet. Der Fußbodenbelag ist somit vorzugsweise durch das Eigengewicht der Fußbodenpaneele stabilisiert. Dies schließt nicht aus, dass gegebenenfalls Fugen zwischen den einzelnen Fußbodenpaneelen zumindest teilweise mit einem Fugenmaterial gefüllt sein können, was einer bevorzugten Ausführungsform entspricht.

Durch die lose Verlegung sind der Montageaufwand und der Reparaturaufwand, insbesondere der Aufwand zum Austauschen der einzelnen Fußbodenpaneele, reduziert. Weiterhin wird eine Führung beispielsweise von Leitungen und/oder Luft vereinfacht, was insbesondere modernen und energieeffizienten Bauweisen mit beispielsweise einer Zwangslüftung bei Niedrigenergie-Häusern entgegenkommt.

Bei der mechanischen Verriegelung durch ein Nut-Feder-System gemäß dem Stand der Technik werden zwar Unebenheiten des Untergrundes überbrückt. Dadurch ist jedoch der Schallschutz, insbesondere Trittschallschutz der Konstruktion reduziert. Wenn jedoch die Bodenelemente lose verlegt werden und gegebenenfalls erst später über eine geeignete Fugenmasse verbunden werden, wird die Ausbildung von Hohlräumen unterhalb des Bodenbelags reduziert, was sich positiv auf die Schallbilanz des Bodens auswirkt.

Beschädigte Elemente können vergleichsweise einfach ausgetauscht werden, dadurch dass ein Fugenmaterial aufgeschnitten wird und das lose verlegte, nicht formschlüssige, Fußbodenpaneel, herausgehoben wird. Dies ist bei den formschlüssig verlegten Elementen gemäß dem Stand der Technik aufgrund der mechanischen Verriegelung von Fußbodenpaneel zu Fußbodenpaneel nicht möglich. Hier ist vielmehr der gesamte Boden als integrale Einheit ausgebildet. Der formschlüssige Aufbau im Stand der Technik ist somit durch einen kraftschlüssigen Aufbau ersetzt.

Bei der Gipsschicht kann es sich vorzugsweise um eine Gipskartonschicht bzw. Gipsfaserschicht handeln. Die Gipsschicht ist vorzugsweise plattenförmig.

Gerade durch die Kombination von Gipsschicht und der insbesondere elastischen Dämmschicht, vorzugsweise Korkschicht, wird zusammen mit der losen Verlegung ein Fußbodenbelag aufgezeigt, der sich durch einen deutlich verbesserten Schallschutz auszeichnet. Weiterhin wird durch das Vorsehen der Gipsschicht ein verbesserter Brandschutz gewährleistet.

Die obere Deckschicht kann beispielsweise einer Abnutzung des Fußbodenbelags entgegenwirken bzw. entsprechend ausgebildet sein. Andererseits eignet sich die obere Deckschicht auch dazu, um den Fußbodenbelag, beispielsweise durch eine Steinoptik oder Holzoptik aufzuwerten.

Die Gipsschicht kann einen Anteil von beispielsweise mindestens 10%, vorzugsweise mindestens 30%, insbesondere mindestens 50% Zellulose enthalten.

Vorzugsweise sind die Fußbodenpaneele, insbesondere herstellerseitig, als einstückiges Bauteil ausgebildet. Dadurch wird der Montage- und/oder Reparaturaufwand weiter reduziert.

In einer bevorzugten Weiterbildung ist eine Vielzahl der Fußbodenpaneele mit mindestens einem Hohlraumkanal ausgestattet, wobei die Hohlraumkanäle vorzugsweise derart miteinander korrespondierend ausgebildet sind, dass Hohlraumkanäle benachbarter Platten (deren entsprechende Ausrichtung vorausgesetzt) ineinander übergehen. Diese Hohlräume können insbesondere für die Installation von Leitungen (Kabeln) und/oder zur Luftführung genutzt werden, ohne dass der Fußbodenbelag an sich instabil würde.

Die Hohlraumkanäle weisen vorzugsweise eine (lichte) Höhe von 6 bis 15 mm, vorzugsweise 8 bis 12 mm auf. Weiter vorzugsweise sind die Hohlraumkanäle in den Plattenkanten und/oder an der Unterseite der Fußbodenpaneele angeordnet. Die Hohlraumkanäle können parallel zu den Plattenkanten verlaufen und/oder diagonal, beispielsweise in einem Winkel von 10 bis 80 Grad, vorzugsweise 30 bis 60 Grad, weiter vorzugsweise (etwa) 45 Grad zu den Plattenkanten verlaufen.

Durch die Hohlräume können Kabel und Leitungen aufgenommen werden, die eine vollflächige horizontale Kabel-Installation des gesamten Bodens ermöglichen. Weiterhin können die Hohlräume zur horizontalen Luftführung genutzt werden und somit eine Pump- und Quelllüftung an jeder Stelle des Raumes ermöglichen. Die Hohlräume können innerhalb der Fußbodenpaneele vorgesehen sein. Bevorzugt ist jedoch eine Ausbildung, die nach außen, insbesondere in Richtung der Unterseite, offen ist. Bei einer derartigen Ausbildung kann ein einzelnes Fußbodenpaneel entfernt werden, wobei die Funktionen der Hohlräume beispielsweise als Kabelführung erhalten bleiben.

Vorzugsweise beträgt die Dichte der Gipsschicht und/oder eine mittlere Dichte des gesamte Fußbodenpaneels mindestens 1000 kg/m³, vorzugsweise 1100 kg/m³, noch weiter vorzugsweise 1300 kg/m³, noch weiter vorzugsweise mindestens 1500 kg/m³. Bei einer vergleichsweise hohen Dichte der Gipsschicht kann diese besonders gut durch ihr Eigengewicht stabilisiert werden, das den Montageaufwand reduziert.

Die Gipsschicht, vorzugsweise die Fußbodenpaneele, können unbrennbar sein, insbesondere im Sinne der DIN 4102. Dadurch kann der Fußbodenbelag gleichzeitig mehrere Funktionen gewährleisten, so dass die Flexibilität erhöht ist.

Vorzugsweise weist mindestens ein Fußbodenpaneel, insbesondere eine Vielzahl der Fußbodenpaneele mindestens einen Durchbruch und/oder eine Bohrung auf, die eine Oberseite des Fußbodenpaneels mit einer Unterseite verbindet. Der Durchbruch und/oder die Bohrung sind insbesondere vertikal angeordnet. Dadurch wird auf einfache Weise eine Erschließung der Hohlräume zur Leitungsführung bzw. Luftführung ermöglicht. Insbesondere sind dazu keine Spezialwerkzeuge bzw. - maschinen nötig. Dies reduziert weiter den Reparatur-, und Wartungsaufwand der Leitungen bzw. Luftführungen in den Hohlräumen.

Die Fußbodenpaneele weisen vorzugsweise eine Höhe von höchstens 25, weiter vorzugsweise höchstens 20 mm auf. Außerdem weisen die Fußbodenpaneele eine Höhe von vorzugsweise mindestens 10 mm, insbesondere mindestens 15 mm auf.

Die Ausbildung der Fugen zwischen den Plattenelementen kann so gewählt sein, dass jedes Fußbodenpaneel aufgenommen oder ausgetauscht werden kann und dennoch die Funktion der Hohlräume im Sinne kommunizierender Röhren erhalten bleibt.

Die Fußbodenpaneele sind vorzugsweise herstellerseitig vollständig vorgefertigt, so dass diese an der Baustelle nur noch ausgelegt und gegebenenfalls angepasst werden müssen, was sich vorteilhaft auf den Montageaufwand, insbesondere die Montagezeit auswirkt.

Die obere Deckschicht umfasst vorzugsweise Kork- und/oder Kunststoff, wie beispielsweise Polyurethan, und/oder Linoleum und/oder PVC (Polyvenylchlorid) und/oder LVT ("Luxury Vinyl Tiles", Designbodenbelag) und/oder Gummi und/oder holzartige Beschichtungen, insbesondere Furnier und/oder Parkett und/oder Kunststofflaminate, insbesondere HPL ("High Pressure Laminate"; insbesondere Verbundwerkstoff in Plattenform aus mehreren Lagen Papier und Harz) und/oder CPL ("Continuous Pressing Laminates"; insbesondere laminierte Oberflächenausführung wie bei Zimmertüren) und/oder DPL (direkt beschichteter Laminatboden) und/oder eine Metallschicht (allgemein: punktlastverteilende Schicht), insbesondere ein Stahlblech und/oder ein Aluminiumblech. Durch die Metallschicht ist eine Übertragung von Lastspitzen gleichmäßig auf die lasttragenden integralen Elemente der Fußbodenpaneele auf einfache Weise möglich. Dadurch wird bei geringem Herstellungsaufwand die Stabilität des Fußbodenbelags verbessert.

Die oben genannte Aufgabe wird unabhängig gelöst durch Verwendung eines Fußbodenpaneels als Bestandteil des vorbeschriebenen Fußbodenbelags, wobei das Fußbodenpaneel lose verlegbar ist und wobei das Fußbodenpaneel eine obere Deckschicht, eine unterhalb der Deckschicht angeordnete Gipsschicht und eine unterhalb der Gipsschicht angeordnete, insbesondere elastische, Dämmschicht, vorzugsweise Korkschicht, umfasst. Bezüglich der Vorteile wird auf den oben beschriebenen Fußbodenbelag verwiesen.

Das Fußbodenpaneel kann insbesondere herstellerseitig als einstückiges Bauteil ausgebildet sein. Das Fußbodenpaneel kann mindestens einen Hohlraumkanal aufweisen. Die Hohlraumkanäle können eine lichte Höhe von 6 bis 15 mm, vorzugsweise 8 bis 12 mm aufweisen, oder in den Plattenkanten und/oder an der Unterseite des Fußbodenpaneels angeordnet sein. Die Hohlraumpaneele können parallel zu den Plattenkanten verlaufen und/oder diagonal, beispielsweise in einem Winkel von 10 bis 80 Grad, vorzugsweise 30 bis 60 Grad, weiter vorzugsweise (etwa) 45 Grad zu den Plattenkanten verlaufen. Die Gipsschicht, vorzugsweise das Fußbodenpaneel, kann unbrennbar, insbesondere im Sinne der DIN 4102, ausgebildet sein. Das Fußbodenpaneel kann mindestens einen Durchbruch und/oder mindestens eine Bohrung aufweisen, der/die eine Oberseite des Fußbodenpaneels mit einer Unterseite verbindet. Das Fußbodenpaneel kann eine Höhe von höchstens 25, vorzugsweise höchstens 20 mm aufweisen. Außerdem kann das Fußbodenpaneel eine Höhe von mindestens 10 mm, vorzugsweise mindestens 15 mm aufweisen. Eine Deckschicht des Fußbodenpaneels kann Kork und/oder Kunststoff, insbesondere Polyurethan und/oder Linoleum und/oder PVC und/oder LVT und/oder Gummi und/oder holzartige und/oder steinartige, Beschichtungen, insbesondere Furnier und/oder Parkett und/oder Kunststofflaminat, insbesondere HPL und/oder CPL und/oder DPL und/oder eine Punktlast-verteilende Schicht, insbesondere Metallschicht, vorzugsweise Stahlblech und/oder Aluminiumblech, zur Übertragung von Lastspitzen gleichmäßig auf die lasttragenden integralen Elemente des Fußbodenpaneels, aufweisen.

Weiterbildungen ergeben sich durch ein Set von Fußbodenpaneelen der vorbeschriebenen Art, insbesondere zur Verwendung und/oder als Bestandteil des Fußbodenbelags der vorbeschriebenen Art, wobei eine Vielzahl der Fußbodenpaneele einen Hohlraumkanal aufweisen, wobei die Hohlraumkanäle vorzugsweise derart miteinander korrespondierend ausgebildet sind, dass Hohlraumkanäle benachbarter Platten ineinander übergehen.

Insgesamt zeichnet sich der Fußbodenbelag bzw. das Fußbodenpaneel bzw. das Set von Fußbodenpaneeelen dadurch aus, dass eine einfache und vergleichsweise risikofreie Verlegung möglich ist. Insbesondere sind nicht zwingend Fachleute notwendig, sondern auch der Heimwerker kann die Verlegung durchführen. Weiterhin ist eine geringe Aufbauhöhe möglich. Der Fußbodenbelag ist vergleichsweise gut von einem Rohboden akustisch entkoppelt. Weiterhin ist der Fußbodenbelag (vollflächig) elektrifizierbar und/oder belüftbar. Eine vergleichsweise gute Lastverteilung bzw. ein vergleichsweise guter Bodenausgleich ist ermöglicht. Durch Aufnahme verschiedener Deckschichten kann der Fußbodenbelag ästhetisch aufgewertet werden. Es können verschiedene recycelte Rohstoffe verwendet werden (beispielsweise Altpapier/Rea-Gips). Dadurch wird die Umweltbilanz verbessert. Der Fußbodenbelag kann insgesamt recyclingfähig sein. Der Primärenergie-Verbrauch bei der Herstellung (beispielsweise im Vergleich zu Keramik-Fliesen) ist deutlich reduziert, da bei der Herstellung von Gipsschichten bzw. Gipsplatten üblicherweise lediglich ein Trocknungsprozess bei 120° bis 150° durchgeführt werden muss (im Gegensatz zu einem Brennprozess im Bereich von 1.200°C bei der Herstellung von Keramik-Fliesen oder dergleichen). Die Verlegung kann vergleichsweise einfach und schnell erfolgen. Es sind keine bzw. nur geringe Wartezeiten bis zum Verfugen zu erwarten. Die Verlegung kann trocken erfolgen. Schon während der Verlegung ist der bereits verlegte Teil des Fußbodenbelags begehbar. Die Brandschutzeigenschaften sind allgemein verbessert. Eine Emission von Schadstoffen und Gerüchen ist nicht vorhanden oder zumindest deutlich reduziert (insbesondere gegenüber Formaldehyd-emittierenden Holzböden). Von dem Bodenbelag ist keine (oder nur eine geringe) Staub- und Schmutzentwicklung zu erwarten. Der Monteur des Bodenbelages wird entlastet, da die Beurteilung des Untergrundes weniger bedeutsam ist. Problem mit Scherspannungen im Estrich oder Untergrund sind nicht zu erwarten. Es sind grundsätzlich keine Dehnungsfugen erforderlich. Insgesamt handelt es sich um ein besonders geeignetes System für die Renovierung. Der Monteur kann vergleichsweise kraft- und gelenkschonend arbeiten.

Weitere Ausführungsformen ergeben sich aus den Unteransprüchen. Nachfolgend wird die Erfindung auch hinsichtlich weiterer Merkmale und Vorteile anhand von Ausführungsbeispielen beschrieben, die anhand der folgenden Figuren näher erläutert werden.

Hierbei zeigen:
- Fig. 1: eine schematische Seitenansicht eines Ausschnittes eines Fußbodenbelags einer ersten Ausführungsform;
- Fig. 2: eine schematische Ansicht eines Fußbodenpaneels gemäß der ersten Ausführungsform von unten;
- Fig. 3: eine schematische Darstellung eines Fußbodenpaneels gemäß einer zweiten Ausführungsform von unten;
- Fig. 4: einen Ausschnitt eines Fußbodenbelags in schematischer Darstellung;
- Fig. 5: ist eine von Fig. 1 abweichende Ausführungsform des Fußbodenbelags.

In der nachfolgenden Beschreibung werden für gleiche und gleich wirkende Teile dieselben Bezugszeichen verwendet.

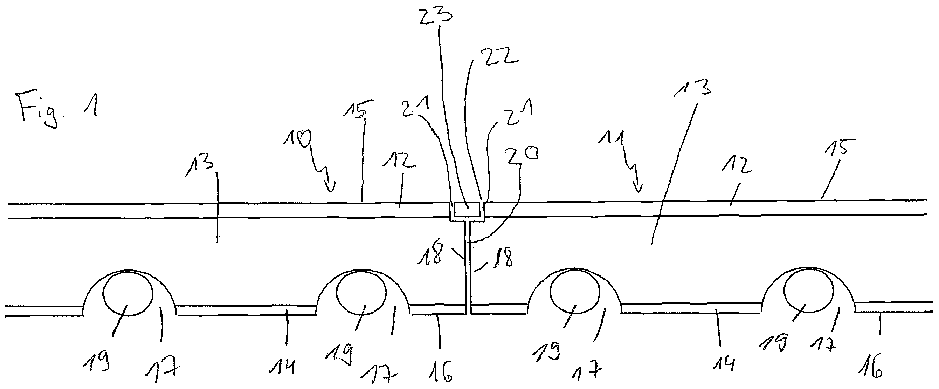

Fig. 1 zeigt einen Ausschnitt eines Fußbodenbelags in einer Seitenansicht. Es sind (ausschnittsweise) ein erstes Fußbodenpaneel 10 sowie ein zweites Fußbodenpaneel 11 zu sehen. Die Fußbodenpaneele 10, 11 umfassen jeweils eine Deckschicht 12, eine unterhalb der Deckschicht 12 angeordnete Gipsschicht 13 und eine unterhalb der Gipsschicht 13 angeordnete Korkschicht 14 (allgemein Dämmschicht). Die Deckschicht 12 ist an einer Oberseite 15 der Fußbodenpaneele 10, 11 angeordnet. Gegenüber der Oberseite 15 befindet sich eine Unterseite 16, die beispielsweise einem Rohboden (oder Estrich) zugewandt ist.

In den Fußbodenpaneelen 10, 11 befinden sich Hohlraumkanäle 17, die im Ausführungsbeispiel gemäß Fig. 1 entlang von Kanten 18 der Fußbodenpaneele 10, 11 (also in die Zeichenebene hinein) verlaufen und einen etwa halbkreisförmigen Querschnitt aufweisen. Der Querschnitt kann auch eine andere Form aufweisen, beispielsweise rechteckförmig oder elliptisch. In den Hohlraumkanälen 17 sind Kabel 19 angeordnet, die beispielsweise einer Stromführung oder als Signalleitung dienen. Die Hohlraumkanäle 17 sind auch geeignet, weitere Leitungen aufzunehmen oder selbst als Leitung, beispielsweise Luftführung, zu dienen. Die Fußbodenpaneele 10, 11 bilden im Bereich ihrer Kanten 18 eine Fuge 20 aus, die in einem an die Oberseite 15 angrenzenden Bereich erweitert ist. Die Erweiterung wird durch sich jeweils gegenüberliegende Eckausnehmungen 21 der Fußbodenpaneele bereitgestellt und ist insgesamt rechteckig (im Querschnitt) ausgebildet. In die Erweiterung 22 ist ein Füllmaterial 23 als Dichtmasse eingefüllt. Das Füllmaterial ist als Dispersionsfuge ausgebildet. Die Erweiterung hat vorzugsweise einen Querschnitt von etwa 4 ^{∗} 4 mm.

Die Deckschicht 12 hat vorzugsweise eine Dicke von 2 bis 4 mm. Die Korkschicht 14 hat vorzugsweise eine Dicke von 1,5 bis 2,5 mm (beispielsweise 2 mm). Die Gipsschicht 14 hat vorzugsweise eine Dicke von 15 bis 21 mm, vorzugsweise etwa 18 mm. Ein Abstand von der Deckschicht 12 zu den Hohlraumkanälen 17 beträgt vorzugsweise etwa 6 bis 10 mm, insbesondere etwa 8 mm. Die Hohlraumkanäle 17 sind vorzugsweise ausgebildet um 8 bis 12 mm (im Durchmesser), insbesondere 10 mm dicke Leitungen aufzunehmen und weisen vorzugsweise eine Höhe von 10 bis 14 mm auf.

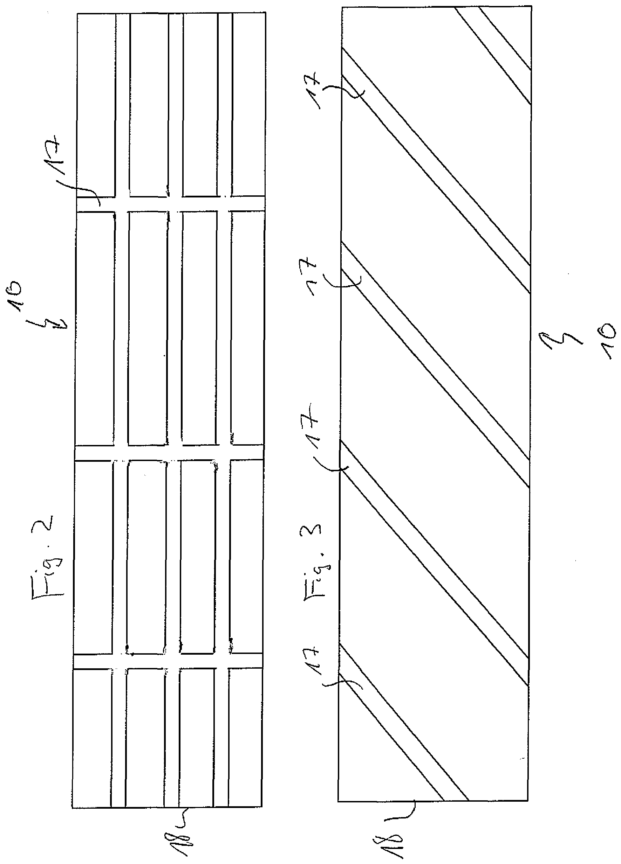

Fig. 2 zeigt schematisch ein Fußbodenpaneel 10 in einer Ansicht von unten. Gemäß dieser Ausführungsform ist der Hohlraumkanal 17 in einem Rechteckraster angeordnet.

In Fig. 3 ist eine von Fig. 2 abweichende Ausführungsform des Fußbodenpaneels 10 in einer schematischen Ansicht von unten gezeigt. Dabei sind mehrere Hohlraumkanäle 17 vorgesehen, die diagonal bezüglich der Kante 18 des Fußbodenpaneels 10 verlaufen.

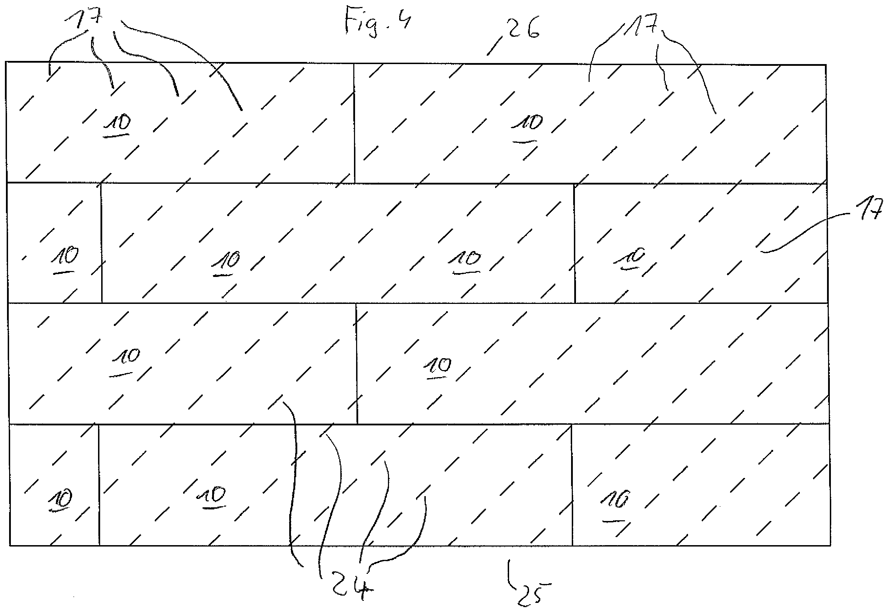

In Fig. 4 ist ein Ausschnitt eines Fußbodens mit mehreren Fußbodenpaneelen 10 in einer schematischen Ansicht von unten zu sehen. Jedes dieser Fußbodenpaneele 10 weist mehrere diagonal verlaufende Hohlraumkanäle 17 auf. Diese Hohlraumkanäle 17 sind dabei derartig angeordnet, dass die Hohlraumkanäle 17 von jeder der gezeigten Fußbodenpaneele 10 in Verbindung mit einem Hohlraumkanal 17 eines jeweils benachbarten Fußbodenpaneels stehen. Dadurch bilden sich durchgehende Gesamt-Hohlraumkanäle 24 aus, die sich von einer ersten Seite 25 bis zu einer zweiten Seite 26 des gezeigten Abschnittes des Fußbodenbelags erstrecken. Dadurch ergibt sich eine durchgehende Hohlraumverbindung zwischen der ersten Seite 25 zu der zweiten Seite 26 durch den gezeigten Ausschnitt des Fußbodenbelags hindurch. Vorzugsweise ist der gesamte Fußbodenbelag analog dem in Fig. 4 gezeigten Ausschnitt ausgebildet. Die Hohlraumkanäle 17 bzw. Gesamt-Hohlraumkanäle 24 sind gestrichelt dargestellt.

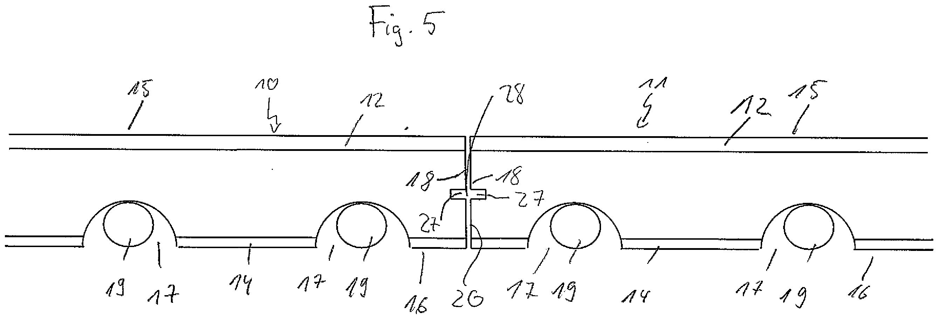

In Fig. 5 ist eine von Fig. 1 abweichende Ausführungsform des Fußbodenbelags zu sehen. Der Fußbodenbelag gemäß Fig. 5 ist wie der Fußbodenbelag gemäß Fig. 1 ausgebildet, wobei jedoch die folgenden Unterschiede bestehen:
Die Eckausnehmungen 21 für das Füllmaterial 23 sind nicht vorgesehen (können aber vorgesehen sein). Allerdings sind im Bereich der Kanten 18, die die Fuge 20 ausbilden, rechteckige Ausnehmungen 27 vorgesehen, die einander gegenüberliegende angeordnet sind und somit eine gemeinsame Ausnehmung 28 ausbilden. Diese Ausnehmung 28 erstreckt sich vorzugsweise in horizontaler Richtung (also parallel zu Ober- bzw. Unterseite 15, 16 der Fußbodenpaneele 10) durch das Fußbodenpaneel hindurch. Die Ausnehmung 28 kann dabei insbesondere zur Aufnahme von Leitungen oder als Luftführung (analog den Hohlraumkanälen 17) dienen.

Die Oberseite 15 bzw. die Deckschicht 12 können (insbesondere digital) bedruckt sein beispielsweise mit einem Holz- oder Steinmuster.

Die Fußbodenpaneele 10, 11 können als Laminat vorliegen. Die Fugen sind mit Dispersionsfugenmasse ausgefüllt. Die Deckschicht 12 kann eine Steinzeugplatte umfassen. Die Fuge bzw. ein Füllmaterial 23 in der Fuge ist aufschneidbar. Ober- und/oder Unterseite 15, 16 sind vorzugsweise versiegelt.

### Bezugszeichenliste

- 10: erstes Fußbodenpaneel
- 11: zweites Fußbodenpaneel
- 12: Deckschicht
- 13: Gipsschicht
- 14: Korkschicht
- 15: Oberseite
- 16: Unterseite
- 17: Hohlraumkanal
- 18: Kante
- 19: Kabel
- 20: Fuge
- 21: Eckausnehmung
- 22: Erweiterung
- 23: Füllmaterial
- 24: Gesamt-Hohlraumkanal
- 25: erste Seite
- 26: zweite Seite
- 27: Ausnehmung
- 28: Ausnehmung

## Patentansprüche

1. Fußbodenbelag, umfassend lose verlegte Fußbodenpaneele (10, 11), von welchen jedes Fußbodenpaneel (10, 11) unter Verzicht auf eine formschlüssige Verbindung mit einem benachbarten Fußbodenpaneel derart verlegt ist, dass es aus dem Fußbodenbelag entfernbar ist, ohne ein benachbart verlegtes Fußbodenpaneel (10, 11) zu entfernen, mit einer oberen Deckschicht (12), einer unterhalb der Deckschicht angeordneten Gipsschicht (13) und einer unterhalb der Gipsschicht (13) angeordneten, insbesondere elastischen, Dämmschicht (14), die vorzugsweise als Korkschicht ausgebildet ist, wobei die Fußbodenpaneele (10,11) im Bereich ihrer Kanten (18) eine Fuge (20) ausbilden, **dadurch gekennzeichnet, dass** die Fugen (20) zwischen den Fußbodenpaneelen (10, 11) mit einer Dispersionsfugenmasse gefüllt sind, wobei die Dispersionsfugenmasse aufschneidbar ist.

2. Fußbodenbelag nach Anspruch 1, **dadurch gekennzeichnet, dass** die Fußbodenpaneele (10, 11), insbesondere herstellerseitig, als einstückiges Bauteil ausgebildet sind.

3. Fußbodenbelag nach einem der vorhergehenden Ansprüche, **dadurch gekennzeichnet, dass** mehrere Fußbodenpaneele (10, 11) mindestens einen Hohlraumkanal (17) aufweisen, wobei die Hohlraumkanäle (17) vorzugsweise derart zueinander korrespondierend ausgebildet sind, dass Hohlraumkanäle (17) benachbarter Platten ineinander übergehen.

4. Fußbodenbelag nach einem der vorhergehenden Ansprüche, **dadurch gekennzeichnet, dass** die Hohlraumkanäle (17) eine lichte Höhe von 6 bis 15 mm, vorzugsweise 8 bis 12 mm aufweisen und/oder in Kanten (18) der Fußbodenpaneele (10, 11) und/oder einer Unterseite (16) der Fußbodenpaneele (10, 11) angeordnet sind und/oder parallel zu den Kanten (18) verlaufen und/oder diagonal, beispielsweise in einem Winkel von 10 bis 80 Grad, vorzugsweise 30 bis 60 Grad, noch weiter vorzugsweise etwa 45 Grad, zu den Kanten verlaufen.

5. Fußbodenbelag nach einem der vorhergehenden Ansprüche, **dadurch gekennzeichnet, dass** die Dichte der Gipsschicht (13) mindestens 1000 kg/m³, vorzugsweise mindestens 1100 kg/m³, noch weiter vorzugsweise mindestens 1300 kg/m³, noch weiter vorzugsweise mindestens 1500 kg/m³ beträgt.

6. Fußbodenbelag nach einem der vorhergehenden Ansprüche, **dadurch gekennzeichnet, dass** die Gipsschicht (13), vorzugsweise die Fußbodenpaneele (10, 11), unbrennbar ausgebildet sind.

7. Fußbodenbelag nach einem der vorhergehenden Ansprüche, **dadurch gekennzeichnet, dass** mindestens ein Fußbodenpaneel (10, 11) mindestens einen Durchbruch und/oder mindestens eine Bohrung aufweist, der/die eine Oberseite (15) des Fußbodenpaneels (10, 11) mit einer Unterseite (16) verbindet.

8. Fußbodenbelag nach einem der vorhergehenden Ansprüche, **dadurch gekennzeichnet, dass** die Deckschicht eines oder mehrere der folgenden Materialien umfasst: Kork und/oder Kunststoff, insbesondere Polyurethan, Linoleum und/oder PVC und/oder LVT und/oder Gummi und/oder holzartige Beschichtungen, insbesondere Furniere und/oder Parkett und/oder Kunststofflaminat, insbesondere HPL und/oder CPL und/oder DPL, und/oder eine steinartige Beschichtung, insbesondere Naturstein oder Natursteinersatz und/oder eine Punktlast-verteilende Schicht, insbesondere Metallschicht, vorzugsweise Stahlblech und/oder Aluminiumblech.

9. Verwendung eines Fußbodenpaneels (10, 11) als Bestandteil des Fußbodenbelags nach einem der vorhergehenden Ansprüche, wobei das Fußbodenpaneel (10, 11) lose und unter Verzicht auf eine formschlüssige Verbindung mit einem benachbarten Fußbodenelement, verlegbar ist derart, dass es aus einem Fußbodenbelag entfernbar ist, ohne ein benachbart verlegtes Fußbodenpaneel (10, 11) zu entfernen, und wobei das Fußbodenpaneel eine Deckschicht (12), eine unterhalb der Deckschicht (12) angeordnete Gipsschicht (13) und eine unterhalb der Gipsschicht (13) angeordnete, insbesondere elastische, Dämmschicht, vorzugsweise Korkschicht (14) umfasst.

10. Verwendung eines Fußbodenpaneels (10, 11) nach Anspruch 9, **dadurch gekennzeichnet, dass** das Fußbodenpaneel (10, 11), insbesondere herstellerseitig, als einstückiges Bauteil ausgebildet ist.

11. Verwendung eines Fußbodenpaneels (10, 11) nach einem der Ansprüche 9 bis 10, **dadurch gekennzeichnet, dass** das Fußbodenpaneel (10, 11) mindestens einen Hohlraumkanal (17) aufweist.

12. Verwendung eines Fußbodenpaneels (10, 11) nach einem der Ansprüche 9 bis 11, **dadurch gekennzeichnet, dass** der mindestens eine Hohlraumkanal (17) eine lichte Höhe von 6 bis 15 mm, vorzugsweise 8 bis 12 mm aufweist und/oder in Kanten (18) des Fußbodenpaneels (10, 11) und/oder einer Unterseite (16) des Fußbodenpaneels (10, 11) angeordnet ist und/oder parallel zu den Kanten (18) verläuft und/oder diagonal, beispielsweise in einem Winkel von 10 bis 80 Grad, vorzugsweise 30 bis 60 Grad, noch weiter vorzugsweise etwa 45 Grad, zu den Kanten verläuft.

13. Verwendung eines Fußbodenpaneels (10, 11) nach einem der Ansprüche 9 bis 12, **dadurch gekennzeichnet, dass** die Dichte der Gipsschicht (13) mindestens 1000 kg/m³, vorzugsweise mindestens 1100 kg/m³, noch weiter vorzugsweise mindestens 1300 kg/m³, noch weiter vorzugsweise mindestens 1500 kg/m³ beträgt.

14. Verwendung eines Fußbodenpaneels (10, 11) nach einem der Ansprüche 9 bis 13, **dadurch gekennzeichnet, dass** die Gipsschicht (13), vorzugsweise das Fußbodenpaneel (10, 11), unbrennbar ausgebildet ist.

15. Verwendung eines Fußbodenpaneels (10, 11) nach einem der Ansprüche 9 bis 14, **dadurch gekennzeichnet, dass** das Fußbodenpaneel (10, 11) mindestens einen Durchbruch und/oder mindestens eine Bohrung aufweist, der/die eine Oberseite (15) des Fußbodenpaneels (10, 11) mit einer Unterseite (16) verbindet.

16. Verwendung eines Fußbodenpaneels (10, 11) nach einem der Ansprüche 9 bis 15, **dadurch gekennzeichnet, dass** die Deckschicht mindestens eines der folgenden Materialien umfasst: Kork und/oder Kunststoff, insbesondere Polyurethan, Linoleum und/oder PVC und/oder LVT und/oder Gummi und/oder holzartige Beschichtungen, insbesondere Furniere und/oder Parkett und/oder Kunststofflaminat, insbesondere HPL und/oder CPL und/oder DPL, und/oder eine steinartige Beschichtung, insbesondere Naturstein oder Natursteinersatz, und/oder eine Punktlast-verteilende Schicht, insbesondere Metallschicht, vorzugsweise Stahlblech und/oder Aluminiumblech.

## Claims

1. Floor covering, comprising loosely laid floor panels (10, 11) of which each floor panel (10, 11) is laid without using a form-fitting connection to an adjacent floor panel in such a manner that it can be removed from the floor covering, without removing an adjacently laid floor panel (10, 11), having an upper cover layer (12), a plaster layer (13) arranged below the cover layer and an insulating layer (14), in particular a flexible insulating layer, arranged below the plaster layer (13), which insulating layer is preferably designed as a cork layer, wherein the floor panels (10, 11) in the area of their edges (18) form a joint (20), **characterised in that** the joints (20) between the floor panels (10, 11) are filled with a dispersion joint compound, wherein the dispersion joint compound can be cut open.

2. Floor covering according to claim 1, **characterised in that** the floor panels (10, 11) are designed, in particular, by the manufacturer, as a one-piece component.

3. Floor covering according to any one of the preceding claims, **characterised in that** a plurality of floor panels (10, 11) have at least one cavity channel (17), wherein the cavity channels (17) are preferably formed corresponding to each other in such a manner that cavity channels (17) of adjacent plates merge into one another.

4. Floor covering according to any one of the preceding claims, **characterised in that** the cavity channels (17) have a clearance height of 6 to 15 mm, preferably 8 to 12 mm and/or are arranged in edges (18) of the floor panels (10, 11) and/or of a lower side (16) of the floor panels (10, 11) and/or run parallel to the edges (18) and/or run diagonally to the edges, for example, at an angle of 10 to 80 degrees, preferably 30 to 60 degrees, even more preferably approximately 45 degrees.

5. Floor covering according to any one of the preceding claims, **characterised in that** the density of the plaster layer (13) is at least 1000 kg/m³, preferably at least 1100 kg/m³, even more preferably at least 1300 kg/m³, even more preferably at least 1500 kg/m³.

6. Floor covering according to any one of the preceding claims, **characterised in that** the plaster layer (13), preferably the floor panels (10, 11) are designed to be incombustible.

7. Floor covering according to any one of the preceding claims, **characterised in that** at least one floor panel (10, 11) has at least one opening and/or at least one borehole, which connects the upper side (15) of the floor panel (10, 11) with a lower side (16).

8. Floor covering according to any one of the preceding claims, **characterised in that** the cover layer of one or a plurality of the following materials comprises: cork and/or plastic, in particular, polyurethane, linoleum and/or PVC and/or LVT and/or rubber and/or wood-like coatings, in particular, veneer and/or parquet and/or plastic laminate, in particular HPL and/or CPL and/or DPL, and/or a stone-like coating, in particular, natural stone or natural stone replacement and/or a point load-distributing layer, in particular, metal layer, preferably, steel sheet and/or aluminium sheet.

9. Use of a floor panel (10, 11) as a component of the floor covering according to any one of the preceding claims, wherein the floor panel (10, 11) can be laid loosely and without using a form-fitting connection with an adjacent floor element in such a manner that it can be removed from a floor covering without removing an adjacently laid floor panel (10, 11), and wherein the floor panel comprises a cover layer (12), a plaster layer (13) arranged below the cover layer (12) and an insulating layer, in particular a flexible insulating layer, preferably a cork layer (14), arranged below the plaster layer (13).

10. Use of a floor panel (10, 11) according to claim 9, **characterised in that** the floor panel (10, 11) is designed, in particular, by the manufacturer, as a one-piece component.

11. Use of a floor panel (10, 11) according to any one of claims 9 to 10, **characterised in that** the floor panel (10, 11) has at least one cavity channel (17).

12. Use of a floor panel (10, 11) according to any one of claims 9 to 11, **characterised in that** the at least one cavity channel (17) has a clearance height of 6 to 15 mm, preferably 8 to 12 mm and/or is arranged in edges (18) of the floor panel (10, 11) and/or of a lower side (16) of the floor panel (10, 11) and/or runs parallel to the edges (18) and/or runs diagonally to the edges, for example at an angle of 10 to 80 degrees, preferably 30 to 60 degrees, even more preferably approximately 45 degrees.

13. Use of a floor panel (10, 11) according to any one of claims 9 to 12, **characterised in that** the density of the plaster layer (13) is at least 1000 kg/m³, preferably at least 1100 kg/m³, even more preferably at least 1300 kg/m³, even more preferably at least 1500 kg/m³.

14. Use of a floor panel (10, 11) according to any one of claims 9 to 13, **characterised in that** the plaster layer (13), preferably the flor panel (10, 11) is designed to be incombustible.

15. Use of a floor panel (10, 11) according to any one of claims 9 to 14, **characterised in that** the floor panel (10, 11) has at least one opening and/or at least one borehole, which connects an upper side (15) of the floor panel (10, 11) with a lower side (16).

16. Use of a floor panel (10, 11) according to any one of claims 9 to 15, **characterised in that** the cover layer comprises at least one of the following materials: Cork and/or plastic, in particular, polyurethane, linoleum and/or PVC and/or LVT and/or rubber and/or wood-like coatings, in particular, veneer and/or parquet and/or plastic laminate, in particular HPL and/or CPL and/or DPL, and/or a stone-like coating, in particular, natural stone or natural stone replacement and/or a point load-distributing layer, in particular, metal layer, preferably, steel sheet and/or aluminium sheet.

## Revendications

1. Revêtement de sol comprenant des panneaux de sol (10, 11) posés de manière lâche, chaque panneau de sol (10, 11), parmi les panneaux de sol précités, étant posé, sans recourir à une liaison par complémentarité de forme avec un panneau de sol voisin, d'une manière telle qu'il peut être retiré du revêtement de sol sans retirer un panneau de sol (10, 11) posé en position adjacente, comprenant une couche de recouvrement supérieure (12), une couche de plâtre (13) disposée en dessous de la couche de recouvrement et une couche d'isolation (14), en particulier élastique, disposée en dessous de la couche de plâtre (13), qui est réalisée de préférence sous la forme d'une couche de liège ; dans lequel les panneaux de sol (10, 11) forment un joint (20) au niveau de leurs bords (18), **caractérisé en ce que** les joints (20) entre les panneaux de sol (10, 11) sont remplis avec une matière de jointoiement du type à dispersion ; dans lequel la matière de jointoiement du type à dispersion peut être découpée.

2. Revêtement de sol selon la revendication 1, **caractérisé en ce que** les panneaux de sol (10, 11), en particulier au niveau de la fabrication en usine, sont réalisés sous la forme d'un composant en une seule pièce.

3. Revêtement de sol selon l'une quelconque des revendications précédentes, **caractérisé en ce que** plusieurs panneaux de sol (10, 11) présentent au moins un canal formant une cavité (17) ; dans lequel les canaux formant une cavité (17) sont réalisés de préférence de façon respectivement correspondante d'une manière telle que des canaux formant une cavité (17) de plaques voisines se prolongent l'un l'autre.

4. Revêtement de sol selon l'une quelconque des revendications précédentes, **caractérisé en ce que** les canaux formant une cavité (17) présentent une hauteur libre de 6 à 15 mm, de préférence de 8 à 12 mm, et/ou sont disposés dans des bords (18) des panneaux de sol (10, 11) et/ou dans un côté inférieur (16) des panneaux de sol (10, 11) et/ou s'étendent parallèlement aux bords (18) et/ou s'étendent en direction diagonale, par exemple en formant un angle de 10 à 80°, de préférence de 30 à 60 °, de manière encore plus préférée en formant un angle d'environ 45 ° par rapport aux bords.

5. Revêtement de sol selon l'une quelconque des revendications précédentes, **caractérisé en ce que** la masse volumique de la couche de plâtre (13) s'élève à au moins 1000 kg/m³, de préférence à au moins 1100 kg/m³, de manière encore plus préférée à au moins 1300 kg/m³, de manière encore plus préférée à au moins 1500 kg/m³.

6. Revêtement de sol selon l'une quelconque des revendications précédentes, **caractérisé en ce que** la couche de plâtre (13), de préférence les panneaux de sol (10, 11) est/sont réalisé(e)s pour être ininflammable(s).

7. Revêtement de sol selon l'une quelconque des revendications précédentes, **caractérisé en ce qu'**au moins un panneau de sol (10, 11) présente au moins un passage et/ou au moins un alésage qui relie un côté supérieur (15) du panneau de sol (10, 11) à un côté inférieur (16).

8. Revêtement de sol selon l'une quelconque des revendications précédentes, **caractérisé en ce que** la couche de recouvrement comprend une ou plusieurs des matières indiquées ci-après : du liège et/ou une matière synthétique, en particulier du polyuréthane, du linoléum et/ou du PVC et/ou du LVT et/ou du caoutchouc et/ou des enductions imitant un type de bois, en particulier du bois de placage et/ou du parquet et/ou un stratifié en matière synthétique, en particulier du HPL et/ou du CPL et/ou du DPL et/ou une enduction imitant la pierre, en particulier de la pierre naturelle ou un ensemble de pierres naturelles et/ou une couche qui répartit les charges ponctuelles, en particulier une couche métallique, de préférence de la tôle d'acier et/ou de la tôle à base d'aluminium.

9. Utilisation d'un panneau de sol (10, 11) à titre de composant du revêtement de sol selon l'une quelconque des revendications précédentes, dans lequel le panneau de sol (10, 11) peut être posé de manière amovible et sans recourir à une liaison par complémentarité de forme avec un panneau de sol voisin, d'une manière telle qu'il peut être retiré d'un revêtement de sol sans retirer un panneau de sol (10, 11) posé en position adjacente, et dans lequel le panneau de sol comprend une couche de recouvrement (12), une couche de plâtre (13) disposée en dessous de la couche de recouvrement (12) et une couche d'isolation (14), en particulier élastique, disposée en dessous de la couche de plâtre (13), de préférence une couche de liège (14).

10. Utilisation d'un panneau de sol (10, 11) selon la revendication 9, **caractérisé en ce que** le panneau de sol (10, 11) en particulier au niveau de la fabrication en usine, sont réalisés sous la forme d'un composant en une seule pièce.

11. Utilisation d'un panneau de sol (10, 11) selon l'une quelconque des revendications 9 à 10, **caractérisé en ce que** le panneau de sol (10, 11) présente au moins un canal formant une cavité (17).

12. Utilisation d'un panneau de sol (10, 11) selon l'une quelconque des revendications 9 à 11, **caractérisé en ce que** ledit au moins un canal formant une cavité (17) présente une hauteur libre de 6 à 15 mm, de préférence de 8 à 12 mm, et/ou est disposé dans des bords (18) du panneau de sol (10, 11) et/ou dans un côté inférieur (16) du panneau de sol (10, 11) et/ou s'étend parallèlement aux bords (18) et/ou s'étend en direction diagonale, par exemple en formant un angle de 10 à 80 °, de préférence de 30 à 60 °, de manière encore plus préférée en formant un angle d'environ 45 ° par rapport aux bords.

13. Utilisation d'un panneau de sol (10, 11) selon l'une quelconque des revendications 9 à 12, **caractérisé en ce que** la masse volumique de la couche de plâtre (13) s'élève à au moins 1000 kg/m³, de préférence à au moins 1100 kg/m³, de manière encore plus préférée à au moins 1300 kg/m³, de manière encore plus préférée à au moins 1500 kg/m³.

14. Utilisation d'un panneau de sol (10, 11) selon l'une quelconque des revendications 9 à 13, **caractérisé en ce que** la couche de plâtre (13), de préférence le panneau de sol (10, 11) est réalisé(e) pour être ininflammable.

15. Utilisation d'un panneau de sol (10, 11) selon l'une quelconque des revendications 9 à 14, **caractérisé en ce que** le panneau de sol (10, 11) présente au moins un passage et/ou au moins un alésage qui relie un côté supérieur (15) du panneau de sol (10, 11) à un côté inférieur (16).

16. Utilisation d'un panneau de sol (10, 11) selon l'une quelconque des revendications 9 à 15, **caractérisé en ce que** la couche de recouvrement comprend au moins une des matières indiquées ci-après : du liège et/ou une matière synthétique, en particulier du polyuréthane, du linoléum et/ou du PVC et/ou du LVT et/ou du caoutchouc et/ou des enductions imitant un type de bois, en particulier du bois de placage et/ou du parquet et/ou un stratifié en matière synthétique, en particulier du HPL et/ou du CPL et/ou du DPL et/ou une enduction imitant la pierre, en particulier de la pierre naturelle ou un ensemble de pierres naturelles et/ou une couche qui répartit les charges ponctuelles, en particulier une couche métallique, de préférence de la tôle d'acier et/ou de la tôle à base d'aluminium.
